# EUROPÄISCHE PATENTSCHRIFT

(11) **EP 4 063 058 B1**
(45) Veröffentlichungstag und Bekanntmachung des Hinweises auf die Patenterteilung: **12.06.2024**
(21) Anmeldenummer: 22161754.1
(22) Anmeldetag: 14.03.2022
(51) Int. Cl.: B23K 11/31

(54) **STROMQUELLENMODUL FÜR FÜGEVERFAHREN**
CURRENT SOURCE MODULE FOR JOINING METHOD
MODULE DE SOURCE D'ALIMENTATION POUR PROCÉDÉ D'ASSEMBLAGE

(30) Priorität: 22.03.2021 DE 102021107020
(43) Veröffentlichungstag der Anmeldung: 28.09.2022
(73) Patentinhaber: Nimak GmbH, 57537 Wissen (DE)
(72) Erfinder: TÜNKERS, Olaf, 40885 Ratingen (DE); STEUDTER, Johannes, 56414 Oberahr (DE); RÖDDER, Bernd, 57587 Birken-Honigsessen (DE)
(74) Vertreter: Dr. Solf & Zapf Patent- und Rechtsanwalts PartG mbB

(56) Entgegenhaltungen:
- GB-A- 544 494
- US-A- 2 349 835
- US-A- 5 138 129

## Beschreibung

Die Erfindung betrifft ein Stromquellenmodul für Fügeverfahren mit stromerzeugter Wärmeunterstützung, insbesondere für Schweißzangen zum Elektro-Punktschweißen. Das Stromquellenmodul weist einen monolithisch einstückig ausgebildeten Grundkörper auf, welcher ein erstes unbewegliches Befestigungsmittel zur Verbindung eines ersten Fügewerkzeugs und zumindest einen ersten Aufnahmeraum ausgebildet hat. In dem ersten Aufnahmeraum ist ein Stellglied mit einem linearbeweglichen zweiten Befestigungsmittel zur Verbindung mit einem zweiten Fügewerkzeug angeordnet. Weiterhin ist in dem ersten oder einem weiteren Aufnahmeraum eine Transformatoreinheit zur elektrischen Versorgung des Fügewerkzeugs angeordnet.

Weiterhin betrifft die Erfindung eine Schweißzange, welche ein derartiges Stromquellenmodul aufweist.

Ein tragbares Schweißgerät mit einem Stromquellenmodul der eingangs genannten Art ist aus der GB 544 494 A bekannt. Hierbei weist das Stromquellenmodul sowohl eine Antriebseinheit als auch eine Transformatoreinheit auf, wobei die Transformatoreinheit und die Antriebseinheit jeweils in einem Aufnahmeraum eines zweiteiligen Gehäuses des Stromquellenmoduls angeordnet ist. Die Antriebseinheit ist dabei mittels eines Fluiddrucks steuerbar.

Ein weiteres tragbares Schweißgerät mit einem derartigen Stromquellenmodul ist aus der US 2 349 835 A bekannt. Hierbei ist vorgesehen, dass die Transformatoreinheit in einem Gehäuse des Stromquellenmoduls derart angeordnet ist, dass der Transformator von außen so eingestellt werden kann, dass das Gehäuse nicht geöffnet werden muss. Die US 2 349 835 A weist ebenfalls eine integrierte Antriebseinheit auf, wobei die Bewegung mittels eines Fluiddrucksystems erzeugt wird.

Aus der DE 20 2011 052 206 U1 ist ein Grundkörper für eine ter-Schweißzange zum Elektro-Punktschweißen bekannt. Dieser weist einen Träger mit zur Halterung eines festen Elektrodenhalters und eines beweglichen Elektrodenhalters mit einem zugehörigen Antrieb auf. Weiterhin ist an dem Träger ein Schweißtransformator angeordnet. Die DE 20 2011 052 206 U1 sieht dabei vor, dass der Träger aus zwei gleichartigen Seitenplatten besteht, die in zueinander parallel beabstandeter Anordnung zwischen sich einen Aufnahmeraum für die Halterungen und den Schweißstromtransformator bilden. Dieser Aufnahmeraum ist dabei möglichst offengehalten, um die Zugänglichkeit an die Halterungen und den Schweißstromtransformator etc. zu gewährleisten. Die Seitenplatten dieses Grundkörpers weisen dabei eine Vielzahl von Lochöffnungen auf, so dass die Halterungen und der Schweißtransformator in möglichst vielen Einbaulagen in dem Grundkörper montiert werden können. Insbesondere ist der Grundkörper dadurch auf die Verwendung in einer C-Schweißzange und auf die Verwendung in einer X-Schweißzange durch eine Neuanordnung der einzelnen Komponenten konfigurierbar. Ein Auf- bzw. Umbau einer Schweißzange, welche einen derartigen Grundkörper aufweist, ist daher komplex und aufwändig, was ein Fehlerpotential vergrößert.

Die aus dem Stand der Technik bekannten Stromquellenmodule weisen insbesondere Trägerelemente, z. B. zwei Trägerplatten wie aus der DE 202011 052 206 U1 bekannt, oder einen Träger, wie aus der DE 20 2008 013 881 U1 bekannt, auf, wobei der aus der DE 20 2008 013 881 U1 bekannte Träger keinen Aufnahmeraum aufweist, so dass die einzelnen Komponenten um den Träger herum an dem Träger befestigt angeordnet sind. Weiterhin sind die Komponenten bei den aus dem Stand der Technik bekannten Stromquellenmodulen offenliegend am Träger angeordnet, daher muss je nach Einsatzgebiet jede Komponente ein eigenes Gehäuse bzw. eine eigene Schutzhülle zur Abschirmung gegen die Umwelt aufweisen.

Aus der DE 20 2006 016 466 U1 ist eine Basiseinheit für eine Schweißzange zum Elektro-Punktschweißen bekannt. Bei dieser Basiseinheit sind bestimmte Funktionskomponenten gemeinsam in einem Gehäuse angeordnet. Dieses Gehäuse umschließt die Funktionskomponenten, wobei die Funktionskomponenten selbst innerhalb des Gehäuses auf einem Trägerelement angeordnet sind. Daraus ergibt sich ebenfalls ein komplexer Aufbau mit einer hohen Komponentenanzahl.

Weiterhin sind aus dem Stand der Technik Schweißzangen bekannt, bei denen mittels eines pneumatischen/hydraulischen Antriebssystem das Stellglied linear angetrieben wird. Diese Methode des Antriebs hat jedoch einen hohen Energiebedarf.

Der Erfindung liegt die Aufgabe zugrunde, ein neuartiges Stromquellenmodul zur Verfügung zu stellen, welches eine einfachere Handhabung, insbesondere einen einfachen Auf-/Umbau und eine einfache Anwendung, aufweist.

Die Aufgabe wird erfindungsgemäß durch ein Stromquellenmodul mit den Merkmalen des Anspruchs 1 gelöst. Dadurch, dass das Stromquellenmodul einen monolithisch einstückig ausgebildeten Grundkörper aufweist, welcher ein erstes unbewegliches Befestigungsmittel zur Verbindung eines ersten Fügewerkzeugs und zumindest einen ersten Aufnahmeraum ausgebildet hat, wird die Komplexität des Stromquellenmoduls reduziert. Insbesondere ist das erste unbewegliche Befestigungsmittel ein Element des Grundkörpers selbst und keine Funktionskomponente, welche an dem Grundkörper modulartig neu positionierbar angeordnet ist. Vorteilhaft wird dadurch zumindest das erste Fügewerkzeug unmittelbar mit dem Grundkörper verbunden. Zudem wird aufgrund der monolithischen Ausführung des Grundkörpers zumindest ein Aufnahmeraum bereitgestellt, ohne dass mehrere Komponenten, z. B. Trägerplatten oder separate Gehäuse, miteinander verbunden werden müssen. Es wird daher sowohl die Anzahl der Bauteile, als auch der Aufwand der Handhabung reduziert bzw. vereinfacht.

In dem ersten Aufnahmeraum ist ein Stellglied mit einem linearbeweglichen zweiten Befestigungsmittel zur Verbindung mit einem zweiten Fügewerkzeugs angeordnet, so dass das Stromquellenmodul das zweite Fügewerkzeug relativ zu dem ersten Fügewerkzeug bewegen kann, was insbesondere für die Verwendung des Stromquellenmoduls in einer Schweißzange vorteilhaft ist. Weiterhin ist in dem ersten oder einem weiteren Aufnahmeraum eine Transformatoreinheit zur elektrischen Versorgung des Fügewerkzeugs angeordnet. Die Transformatoreinheit besteht insbesondere aus einer Primärspule, einer Sekundärspule und einem Trafokern. Besonders vorteilhaft kann der Grundkörper derart konfiguriert werden, dass einzelne Aufnahmeräume für unterschiedliche Komponenten bereitgestellt werden. Insbesondere hinsichtlich der Übersichtlichkeit und der einfacheren Montage ist eine Separierung der Komponenten vorteilhaft, indem z. B. die Gefahr eines Beschädigens der einzubauenden oder eingebauten Komponenten bei einem Auf-/Umbau oder einer Wartung reduziert wird. Zudem können dadurch unterschiedliche an die jeweiligen Komponenten angepasste Kühlungszonen auf eine einfache Weise zur Verfügung gestellt werden.

Gemäß einem weiteren Aspekt kann der monolithische Grundkörper derart ausgebildet werden, dass eine Wärmeleitung über den Grundkörper selbst erfolgen kann, so dass insbesondere, z. B. von der Transformatoreinheit, erzeugte Wärme schneller aus dem Aufnahmeraum abgeführt werden kann.

Herkömmliche Transformatoreinheiten werden in einem Gehäuse vergossen. Aus dem Stand der Technik ist es bekannt, diese bereits als Einheit vergossenen Spulen als modulares Bauteil an einem Trägerelement anzuordnen. In einer vorteilhaften Ausführungsform der Erfindung ist die Transformatoreinheit stoffschlüssig mit dem Grundkörper verbunden. Durch die stoffschlüssige Verbindung der Transformatoreinheit in bzw. mit dem Aufnahmeraum bildet der Grundkörper eine Einheit mit der Transformatoreinheit, so dass fehlerhafte Montagen verhindert werden. Erfindungsgemäß ist die Transformatoreinheit in einem Aufnahmeraum des Grundkörpers vergossen. Dadurch ist die Transformatoreinheit großflächig an mehreren Wänden des Aufnahmeraums anliegend angeordnet. Neben dem Vorteil, dass die Transformatoreinheit dadurch passgenau in dem Grundkörper angeordnet ist, hat diese Ausführung eine besonders gute Wärmeübertragung von der Transformatoreinheit auf den Grundkörper zur Folge.

Um die Handhabung weiter zu optimieren und Fehler zu vermeiden, ist in dem ersten oder einem weiteren Aufnahmeraum eine Gleichrichteinrichtung angeordnet und mit der Transformatoreinheit elektrisch verbunden.

Zweckmäßig weist die Gleichrichteinrichtung Dioden auf, welche von außerhalb des Grundkörpers zugänglich und austauschbar sind. Vorteilhaft kann dafür der Grundkörper in einer Wand des Aufnahmeraums, in welchem die Gleichrichteinrichtung angeordnet ist, einen Durchbruch aufweisen, so dass ein Anwender leichten Zugang auf die auszutauschenden Dioden erhält. Insbesondere kann der Durchbruch derart ausgebildet sein, dass der Anwender keinen oder nur begrenzten Zugang zu dem übrigen Aufnahmeraum bzw. zu anderen Komponenten hat. Dadurch wird ein fehlerhafter Austausch der Dioden verhindert, und der Austauschprozess selbst kann nahezu intuitiv stattfinden.

Zur linearen Bewegung des zweiten Befestigungsmittels ist vorzugsweise eine Antriebseinheit in Wirkverbindung mit dem Stellglied am Grundkörper angeordnet, so dass das Stellglied das zweite Befestigungsmittel linear bewegen kann. Grundsätzlich kann das Stellglied auch an eine von dem Grundkörper getrennte Antriebseinheit angeschlossen werden. Hinsichtlich der Handhabung kann die Bewegungs-/Kraftübertragung von einer externen Antriebseinheit nachteilig sein. Insbesondere bei einem Elektromotor oder einem magnetischen Linearantrieb als Antriebseinheit hat es sich als besonders vorteilhaft erwiesen, wenn diese am Grundkörper selbst insbesondere unmittelbar angeordnet bzw. montiert sind, da dadurch insbesondere die Gewichtsverteilung günstig beeinflusst wird.

Zweckmäßig ist das Stellglied als eine Spindel und die Antriebseinheit als ein Elektromotor ausgebildet. Vorteilhaft wandelt die Spindel eine Rotationsbewegung des Elektromotors in eine Linearbewegung des zweiten Befestigungsmittels um. Besonders vorteilhaft ist dabei der Elektromotor als Antriebseinheit, wie oben beschrieben, insbesondere unmittelbar mit dem Grundkörper verbunden.

Gemäß einer alternativen Ausführung ist die Antriebseinheit als ein magnetischer Linearantrieb ausgebildet, welcher das Stellglied und das zweite Befestigungsmittel linear bewegen kann. Auch diese Ausführung kann dadurch verbessert werden, indem der magnetische Linearantrieb insbesondere unmittelbar mit dem Grundkörper verbunden ist. Der magnetische Linearantrieb ist dabei vorzugsweise unmittelbar mit dem zweiten Befestigungsmittel verbunden, und beinhaltet als Teil des Antriebs das Stellglied. Insbesondere ersetzt der magnetische Linearantrieb die Spindel, ein Getriebe und ein Antriebszahnrad die bei einer Ausführung der Antriebseinheit als Elektromotor anfallen können.

In einer vorteilhaften Ausführung steht ein Getriebe in Wirkverbindung mit der Antriebseinheit und übersetzt die Bewegung der Antriebseinheit auf das Stellglied.

Es hat sich vorteilhaft gezeigt, dass das Getriebe und/oder die Antriebseinheit in dem ersten und/oder einem weiteren Aufnahmeraum des Grundkörpers angeordnet ist/sind. Insbesondere für eine Wärmeableitung aus dem/den Aufnahmeraum/- räumen ist dies zu bevorzugen, da das Getriebe und die Antriebseinheit im Betrieb regelmäßig Wärme erzeugen, die in einem luftisolierten Gehäuse schlechter abgeführt wird.

In diesem Sinne ist es vorteilhaft, wenn der Grundkörper zwei, insbesondere drei Aufnahmeräume aufweist, wobei in dem zweiten Aufnahmeraum zumindest die Transformatoreinheit angeordnet ist, und in einem ersten Aufnahmeraum zumindest das linearbewegliche Stellglied angeordnet ist. Vorzugsweise ist in dem zweiten oder einem dritten Aufnahmeraum oder einem dritten und einem vierten Aufnahmeraum die Antriebseinheit und das Getriebe angeordnet.

Vorteilhaft kann die Funktion des Stromquellenmoduls oder einer das Stromquellenmodul beinhaltende Werkzeugbaugruppe, z. B. eine Schweißzange, dadurch verbessert werden, dass der Grundkörper zumindest einen Kühlkanal aufweist, welcher ein fluidisches Kühlmittel führen kann. Insbesondere ermöglicht der Kühlkanal einen Wärmeabtransport aus zumindest einem Aufnahmeraum, insbesondere einer von der Transformatoreinheit oder von ausgebildeten Stromschienen erzeugten und auf den Grundkörper übertragenen Wärmeenergie. Synergetisch mit den zuvor genannten Merkmalen wird dadurch eine effektive Kühlung bereitgestellt.

Weiterhin ist es im Stand der Technik bekannt, die einzelnen Komponenten mit Kühlelementen und einer Vielzahl von Kühlmittelleitungen zu versehen. Nachteilig wird dadurch der Bauraumbedarf vergrößert und die Übersichtlichkeit und Komplexität nachteilig beeinflusst. Die Integration der Kühlkanäle in den Grundkörper hat darüber hinaus die Vorteile, dass keine Kühlleitungen abknicken oder beschädigt werden können. Zudem entfällt die Notwendigkeit von einzelnen Kühlelementen an den jeweiligen Bauteilen, so dass die Kühlung synergetisch über die Anordnung der einzelnen Komponenten in der/den Aufnahmeöffnung(en) über den Grundkörper erfolgt. Die Integration von Kühlkanälen in den Grundkörper war aus dem Stand der Technik mangels eines erfindungsgemäßen Grundkörpers nicht möglich.

Insbesondere ist es daher vorteilhaft, wenn zumindest ein Kühlkanal in zumindest einer Wand, vorzugsweise in mehreren Wänden, bevorzugt in allen Wänden des Grundkörpers ausgebildet ist, welche den ersten Aufnahmeraum und/oder weitere Aufnahmeräume umgibt/umgeben.

Weiterhin ist es bevorzugt, dass zumindest ein Kühlkanal in zumindest einer Trennwand des Grundkörpers ausgebildet ist, welche zwei Aufnahmeräume voneinander trennt. Insbesondere ermöglicht diese Ausführung die partielle Kühlung von zwei Aufnahmeräumen.

Gemäß einer bevorzugten Ausführung ist zumindest ein Kühlkanal derart in dem Grundkörper ausgebildet, dass zumindest zwei Aufnahmeräume zumindest einseitig von demselben Kühlkanal umgeben und die Aufnahmeräume mittels des Kühlkanals thermisch miteinander verkoppelt sind. Zweckmäßig kann mit einem einzigen Kühlkanal jeder Aufnahmeraum gekühlt werden.

Insbesondere kann der Grundkörper auch mehrere voneinander fluidisch getrennte Kühlkanäle aufweisen, welche parallel oder vollständig unabhängig zueinander geschaltet sind. Weiterhin können die Kühlkanäle derart ausgebildet sein, dass sie mäanderartig durch den Grundkörper, insbesondere zumindest durch eine Wand zumindest eines Aufnahmeraums verlaufen.

Eine Werkzeugbaugruppe, für die sich das erfindungsgemäße Stromquellenmodul nach einer der vorgenannten Ausführungen besonders eignet, ist eine Schweißzange.

Eine erfindungsgemäße Schweißzange weist insbesondere ein Stromquellenmodul der vorgenannten erfindungsgemäßen Art auf. Weiterhin weist die Schweißzange ein erstes als unbeweglicher Elektrodenarm ausgebildetes Fügewerkzeug und ein zweites als beweglicher Elektrodenarm ausgebildetes Fügewerkzeug auf, wobei an dem ersten Befestigungsmittel der unbewegliche Elektrodenarm verbunden ist, und mit dem zweiten linearbeweglichen Befestigungsmittel der bewegliche Elektrodenarm verbunden ist. Die Elektrodenarme weisen Elektroden auf, wobei die Elektroden elektrisch über die Gleichrichteinrichtung mit der Transformatoreinheit verbunden sind. Entsprechend der der Erfindung zugrunde gelegten Aufgabe wird hiermit eine Schweißzange zur Verfügung gestellt, welche sich durch eine im Vergleich zum Stand der Technik einfachere Handhabung und geringere Fehleranfälligkeit auszeichnet.

Insbesondere ist die Schweißzange als eine C-Zange ausgebildet. Der unbewegliche Elektrodenarm bildet zusammen mit dem Grundkörper eine C-Form. C-Zangen sind aus dem Stand der Technik bekannt. Das Stellglied weist das zweite, entlang einer Stellachse linearbewegliche, Befestigungsmittel auf, wobei an dem Befestigungsmittel der bewegliche Elektrodenarm ausgebildet ist. Der bewegliche Elektrodenarm kann dadurch parallel zur Stellachse mittels des Stellglieds in eine Fügestellung und eine Ruhestellung verfahren. Zweckmäßig sind in der Fügestellung zumindest zwei zu verschweißende Bauteile, insbesondere Metallbleche, mit den Schweißelektroden mit einer Anpresskraft und mit einer über die Gleichrichteinheit von der Transformatoreinheit bereitgestellten elektrischen Energie zum Verschweißen beaufschlagbar.

Gemäß einer weiteren Ausführung ist die Schweißzange als X-Zange ausgebildet, wobei der unbewegliche Elektrodenarm ein Drehlager aufweist, und der bewegliche Elektrodenarm über das Drehlager an dem unbeweglichen Elektrodenarm drehbar gelagert ist. Dadurch ist das Drehlager, im Unterschied zum Stand der Technik nicht am Grundkörper, sondern am unbeweglichen Elektrodenarm angeordnet. Der bewegliche Elektrodenarm ist weiterhin vorzugsweise mit einer Schwinge schwenkbar mit dem zweiten Befestigungsmittel des Stellglieds verbunden, so dass mittels der Linearbewegung des zweiten Befestigungsmittels der bewegliche Elektrodenarm um das Drehlager am unbeweglichen Elektrodenarm herum rotiert wird, und eine Höhenverschiebung der Anbindung der Schwinge zum beweglichen Elektrodenarm relativ zum zweiten Befestigungsmittel von der Schwinge kompensiert wird. Der bewegliche Elektrodenarm bzw. die am beweglichen Elektrodenarm angeordnete Elektrode ist dadurch vorteilhaft entlang einer Kreisbahn in eine Fügestellung und eine Ruhestellung überführbar, wobei in der Fügestellung, wie zuvor beschrieben, die Bauteile gegeneinandergepresst und mit einer elektrischen Energie miteinander verschweißt werden können.

Zweckmäßig können die Elektroden der Schweißzange einzeln oder gemeinsam in einem Kühlkreislauf fluidisch gekühlt werden. Gemäß einer vorteilhaften Ausführung weist das Stromquellenmodul zumindest einen Kühlkanal auf. Dieser ist bevorzugt mit zumindest einem Kühlkanal des beweglichen Elektrodenarm und/oder einem Kühlkanal des unbeweglichen Elektrodenarm fluidisch verbunden. Insbesondere sind die Kühlkanäle bzw. ist der, zumindest eine, Kühlkanal zum Kühlen der jeweiligen Elektrode entlang des jeweiligen Elektrodenarms bis zu der Elektrode verlaufend ausgebildet. Der Kühlkanal kann vorzugsweise einen Vorlauf und einen Rücklauf für jeweils einen Elektrodenarm bilden. In einer besonderen Ausführung ist ein Elektrodenarm mit einem als Vorlauf ausgebildeten Kühlkanal verbunden und der andere Elektrodenarm ist mit einem als Rücklauf ausgebildeten Kühlkanal verbunden, wobei die Kühlkanäle der Elektrodenarme extern des Stromquellenmoduls über eine Kühlbrücke miteinander verbunden sind. Auch kann der jeweilige Elektrodenarm Führungsmittel, z. B. eine Nut oder Arme aufweisen, um entlang des Elektrodenarms eine Schlauchleitung zu führen. Die Schlauchleitung kann insbesondere einen Kühlkanal im Elektrodenarm ersetzen oder ergänzen. Beispielsweise können der Zu- und Rücklauf auf den Kühlkanal im Elektrodenarm und eine Schlauchleitung entlang des Elektrodenarm aufgeteilt werden.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Ansicht eines Grundkörpers eines erfindungsgemäßen Stromquellenmoduls,
- Fig. 2: eine schematische Darstellung einer ersten Ausführung eines Stromquellenmoduls,
- Fig. 3: eine schematische Darstellung einer zweiten Ausführung eines Stromquellenmoduls,
- Fig. 4: eine schematische Darstellung einer dritten Ausführung eines Stromquellenmoduls,
- Fig. 5: eine schematische Darstellung einer vierten Ausführung eines Stromquellenmoduls,
- Fig. 6: eine schematische Darstellung eines Stromquellenmoduls mit einem Kühlkreislauf,
- Fig. 7: eine perspektivische Ansicht einer C-Schweißzange mit einem erfindungsgemäßen Stromquellenmodul,
- Fig. 8: eine perspektivische Ansicht einer X-Schweißzange mit einem erfindungsgemäßen Stromquellenmodul und
- Fig. 9: eine perspektivische Ansicht der X-Schweißzange aus Fig. 8 ohne ein erfindungsgemäßes Stromquellenmodul.

In den verschiedenen Figuren der Zeichnung sind gleiche Teile stets mit denselben Bezugszeichen versehen.

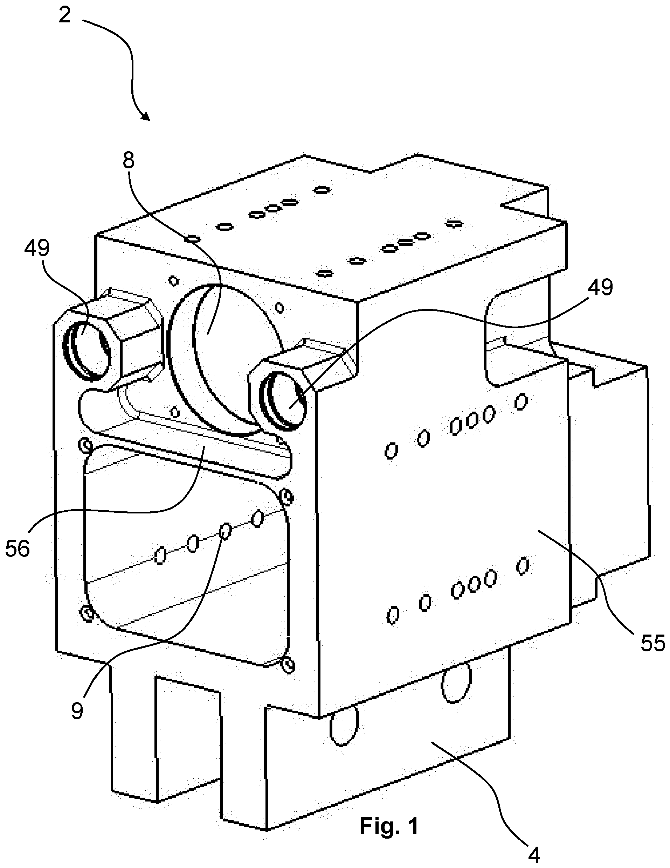

Fig. 1 zeigt einen erfindungsgemäßen monolithischen Grundkörper 2 eines erfindungsgemäßen Stromquellenmoduls 1.

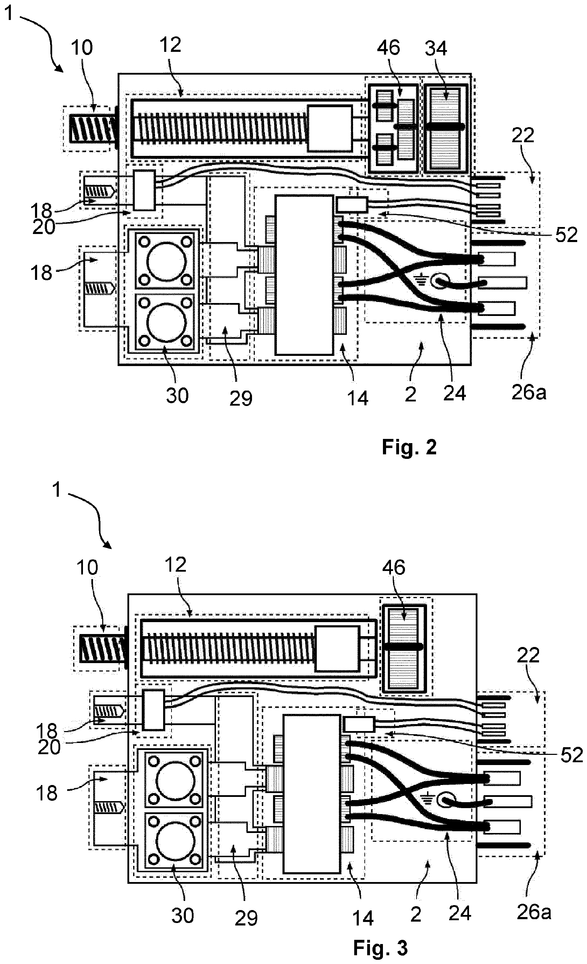

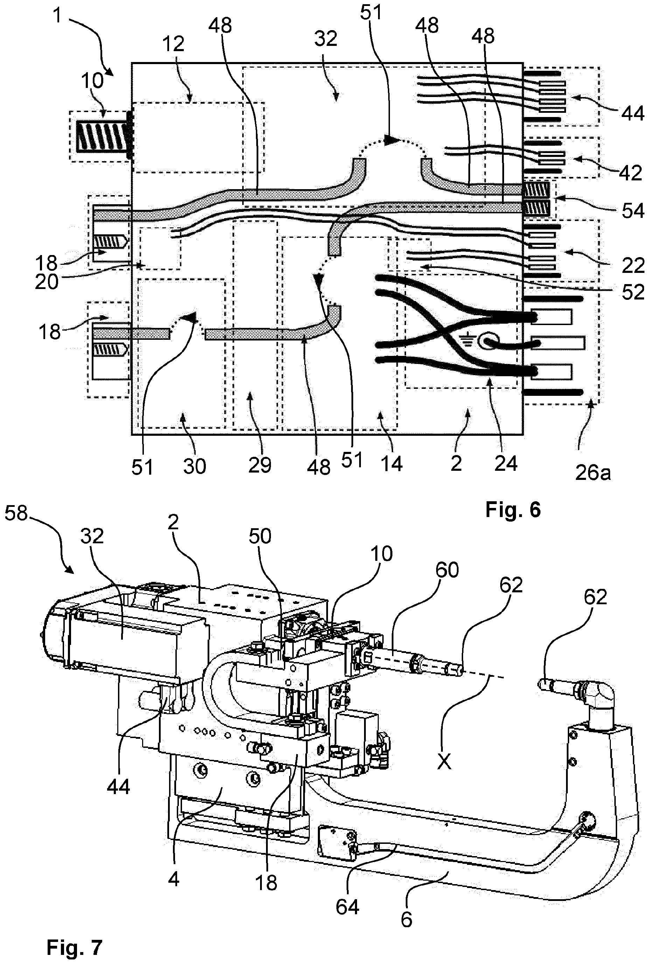

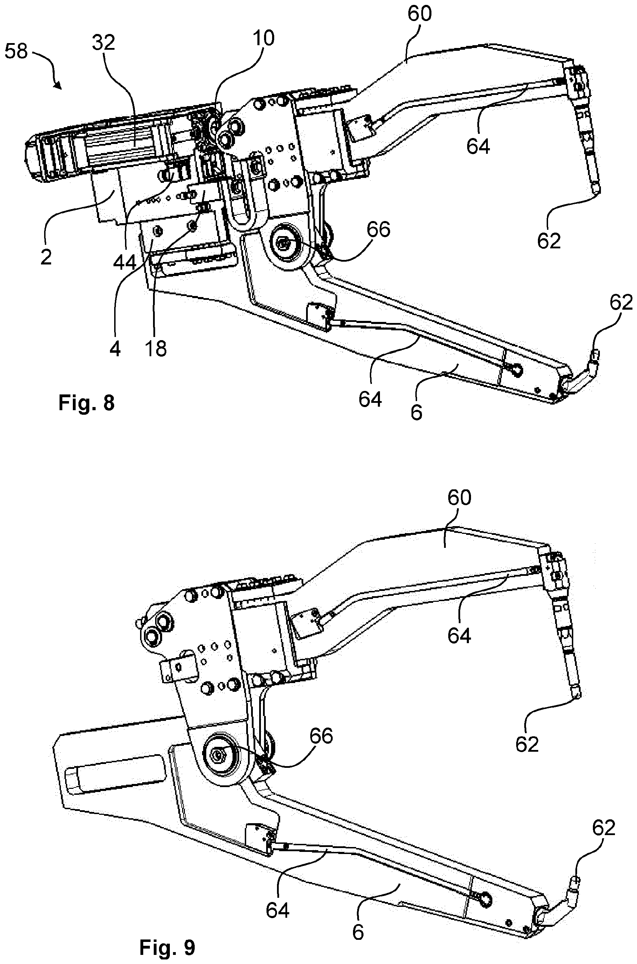

Die Fig. 2 bis 6 zeigen jeweils eine schematische Darstellung von einem erfindungsgemäßen Stromquellenmodul 1 für Fügeverfahren mit stromerzeugter Wärmeunterstützung. Beispielsweise sind in den Fig. 7 und 8 bevorzugte Anwendungen des Stromquellenmoduls 1 in Schweißzangen, insbesondere zum Elektro-Punktschweißen dargestellt.

Das Stromquellenmodul 1 weist den monolithisch einstückig ausgebildeten Grundkörper 2, welcher in Fig. 1 dargestellt ist, auf. Der Grundkörper 2 hat weiterhin, wie in Figur 1 dargestellt, ein erstes unbewegliches Befestigungsmittel 4 zur Verbindung eines ersten Fügewerkzeugs ausgebildet. Beispielhaft ist in den Fig. 7 und 8 als erstes Fügewerkzeug ein unbeweglicher Elektrodenarm 6 unmittelbar an dem Grundkörper 2 befestigt.

Der monolithische Grundkörper 2 besteht insbesondere aus einem metallischen Werkstoff, vorzugsweise aus Stahl oder Aluminium bzw. einer Stahl- oder Aluminiumlegierung. Zweckmäßig hat es sich, um Gewicht zu sparen, als vorteilhaft herausgestellt, den Grundkörper 2 aus Kunststoff auszubilden.

Der Grundkörper 2 hat zudem, wie in Fig. 1 dargestellt, zumindest einen ersten Aufnahmeraum 8 ausgebildet, wobei in dem ersten Aufnahmeraum 8 ein Stellglied mit einem linearbeweglichen zweiten Befestigungsmittel 10 zur Verbindung mit einem zweiten Fügewerkzeug angeordnet ist. Die schematischen Darstellungen der Fig. 2 bis 6 zeigen das Stellglied insbesondere in einer als Spindel 12 ausgeführten Variante.

In dem ersten oder einem weiteren Aufnahmeraum 8, 9 ist eine Transformatoreinheit 14 zur elektrischen Versorgung des Fügewerkzeugs, wie in den Fig. 2 bis 5 schematisch dargestellt, angeordnet. Die Transformatoreinheit 14 besteht insbesondere aus einer Primärspule, einer Sekundärspule und einem Trafokern. Für die Verwendung in einem Punkt-Schweißverfahren wird die Transformatoreinheit 14 vorzugsweise mit Wechselspannung mit Frequenzen von 500 - 20.000 Hz von einem vorgeschalteten Umrichter 16 gespeist.

Zur elektrischen Kontaktierung des Fügewerkzeugs mit der Transformatoreinheit 14 weist das Stromquellenmodul 1 bzw. der Grundkörper 2 vorzugsweise von außerhalb des Stromquellenmoduls 1 zugängliche Leistungsanschlüsse 18 auf. Die Leistungsanschlüsse 18 sind zweckmäßig über die Gleichrichteinrichtung an der Sekundärseite der Transformatoreinheit 14 mit elektrischen Leitern angeschlossen. Insbesondere weist das Stromquellenmodul 1 zwei Leistungsanschlüsse 18, einen Pluspolanschluss und einen Minuspolanschluss, auf, welche insbesondere als Schraub-, Klemm- oder Steckanschlüsse ausgebildet sind. Zweckmäßig ist eine Strommessspule 20 an dem die Leistungsanschlüsse 18 mit der Sekundärseite der Transformatoreinheit 14 verbindenden Leitern angeschlossen, wobei die Signale der Strommessspule 20 insbesondere über einen Steuerleitungsstecker 22, welcher vorzugsweise von außerhalb des Stromquellenmoduls 1 zugänglich ist, abrufbar ist.

Der Umrichter 16 kann entsprechend den Fig. 2, 3 und 5 von dem Stromquellenmodul 1, üblicherweise einem nicht dargestellten Schaltschrank, getrennt angeordnet sein. Dabei weist das Stromquellenmodul 1 eine elektrische Primärverschaltung 24 auf, welche die Transformatoreinheit 14 mit einem Versorgungsanschluss verbindet. Vorzugsweise ist der Versorgungsanschluss an einer von außerhalb des Stromquellenmoduls 1 zugänglichen Stelle als Primärstecker 26a ausgebildet.

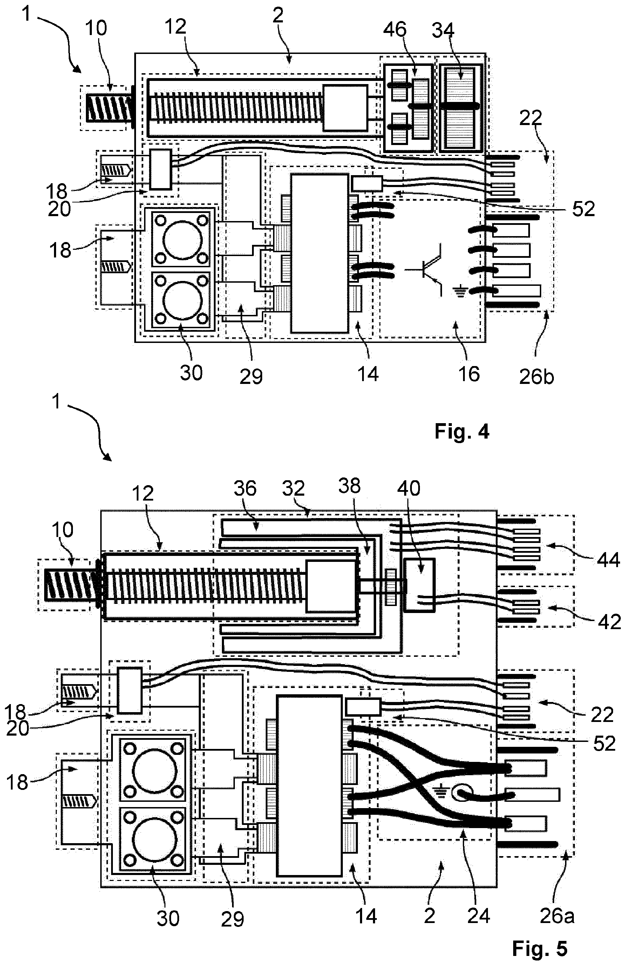

In dem Ausführungsbeispiel gemäß Fig. 4 ist der Umrichter 16 in dem Stromquellenmodul 1 bzw. in dem monolithischen Grundkörper 2 integriert. Hierbei kann eine elektrische Primärverschaltung 26 zwischen einem Versorgungsanschluss und der Transformatoreinheit 14 entfallen, und der Umrichter 16 unmittelbar mit elektrischen Leitungen an die Transformatoreinheit 14 angeschlossen werden. Der Versorgungsanschluss ist vorzugsweise ebenfalls, ähnlich wie bei dem vorgenannten Beispiel, an einer von außerhalb des Stromquellenmoduls 1 zugänglichen Stelle als Primärstecker 26b ausgebildet. Vorzugsweise liegt am Primärstecker 26b eine Dreiphasen-Wechselspannungsversorgung mit zusätzlichem Erdungsanschluss an.

Gemäß einer vorteilhaften Variante der Erfindung werden die elektrischen Komponenten zur Generierung eines Schweißstroms, insbesondere die Transformatoreinheit 14, der Umrichter 16 und eine Gleichrichteinrichtung, jeweils separat in einzelnen Bauteilen unabhängig voneinander in den monolithischen Grundkörper 2 eingebettet. Aus dem Stand der Technik ist es bekannt, die elektrischen Komponenten zumindest teilweise als Baugruppe mit einem gemeinsamen Gehäuse zusammenzufassen und an einem Träger zu befestigen. Im Licht der Erfindung ist eine solche Gruppierung nachteilig, da ein großer Bauraum zur Verfügung gestellt werden muss und sich die Wärmeentwicklung zunehmend zentriert. Die vorteilhafte Anordnung im monolithischen Grundkörper 2 ermöglicht ein Entzerren und Separieren der elektrischen Komponenten, so dass kein Gehäuse für die jeweiligen Komponenten notwendig ist, der Bauraum des Aufnahmeraums 8, 9 ideal genutzt und die Wärmeerzeugung über einen weiter gestreuten Raum besser verteilt und auf den Grundkörper 2 übertragen werden kann.

Erfindungsgemäß ist die Transformatoreinheit 14 stoffschlüssig mit dem Grundkörper 2 verbunden. Durch die stoffschlüssige Verbindung der Transformatoreinheit 14 mit dem Grundkörper 2 wird ein Lösen und ein falsches Wiedereinsetzen verhindert. Insbesondere ist die Verbindung derart ausgebildet, dass ein zerstörungsfreies Trennen der Transformatoreinheit 14 von dem Grundkörper 2 nicht oder nur äußerst schwer möglich ist. Vorteilhaft können dadurch Mängel und Defekte hinsichtlich der Anordnung und Lagerung leichter erkannt werden.

Erfindungsgemäß ist die Transformatoreinheit 14 in dem Aufnahmeraum 8, 9 vergossen, so dass die aushärtende Vergussmasse stoffschlüssig mit dem Grundkörper 2 bzw. dem Aufnahmeraum 8, 9 verbunden ist. Es ist von konventionellen Transformatoreinheiten bekannt, dass diese in einem Gehäuse vergossen werden. Diese konfektionierten Transformatoreinheiten werden genutzt, um in Stromquellenmodulen der bekannten Art eingesetzt und montiert zu werden. Mittels des unmittelbaren Vergusses der Transformatoreinheit 14 im Aufnahmeraum des Grundkörpers 2 ist ein eigenes Gehäuse für die Transformatoreinheit 14 nicht notwendig. Weiterhin werden die Anlage und die Kühlung der Transformatoreinheit 14 sowie das Gewicht des Stromquellenmoduls 1 verbessert. Insbesondere kann die Vergussmasse ein geeignetes Gießharz sein.

Entsprechend den schematischen Darstellungen der Fig. 2 bis 5 ist gemäß einer Variante der Erfindung in dem ersten oder einem weiteren Aufnahmeraum 8, 9 eine Gleichrichteinrichtung angeordnet und mit der Transformatoreinheit 14 elektrisch verbunden. In einer verbesserten Ausführung weist die Gleichrichteinrichtung 30 vorzugsweise Dioden auf, welche von außerhalb des Grundkörpers 2 zugänglich und einzeln oder gemeinsam austauschbar ausgebildet sind. In dem Ausführungsbeispiel des Grundkörpers 2 in Fig. 1 sind die Transformatoreinheit 14 und die Gleichrichteinrichtung jeweils getrennt voneinander in einem zweiten Aufnahmeraum 9 angeordnet und mittels Leistungsanschlussverbindungen elektrisch verbunden. Insbesondere ist der zweite Aufnahmeraum 9 frontseitig und rückseitig zugänglich, so dass der zweite Aufnahmeraum 9 als ein durch den Grundkörper 2 führender Durchbruch ausgebildet ist. Insbesondere sind die Dioden im Ausführungsbeispiel des Grundkörpers 2 gemäß Fig. 1 frontseitig des Grundkörpers 2 insbesondere mittels elektrischen Steckkontakten montier- und demontierbar.

In einem nicht dargestellten Beispiel weist der Grundkörper 2 einen Durchbruch in einer Seitenwand des zweiten Aufnahmeraums auf, so dass die Dioden senkrecht zum zweiten Aufnahmeraum 9 zugänglich sind. Insbesondere bei montierten Fügewerkzeugen ist dadurch der Zugang zu den Dioden erleichtert.

Gemäß einer ebenfalls nicht dargestellten Ausführungsform sind die Dioden in einem eigenen weiteren Aufnahmeraum angeordnet, welcher einen gesonderten Zugang für einen Anwender im Grundkörper 2 aufweist.

Insbesondere wird eine Gleichrichterschaltung in Form von 2, 4, 6 oder 8 Gleichrichterdioden verwendet.

Vorzugsweise weist das Stromquellenmodul 1 eine Antriebseinheit auf, welche in Wirkverbindung mit dem Stellglied am Grundkörper 2 angeordnet ist, so dass das Stellglied das zweite Befestigungsmittel 10 linear bewegen kann. In den schematischen Fig. 2 bis 5 sind unterschiedliche Möglichkeiten zur Umsetzung des Antriebs mit einem Elektromotor 32 dargestellt. Fig. 5 zeigt dabei eine besonders bevorzugte Ausführung, gemäß welcher die Antriebseinheit zusammen mit dem Stellglied in einem Aufnahmeraum 8 des Grundkörpers 2 angeordnet ist. Die Erfindung ist jedoch nicht auf einen Elektromotor 32 als Antriebseinheit beschränkt.

Insbesondere kann die Antriebseinheit, beispielsweise der Elektromotor 32, außerhalb des Grundkörpers 2, wie in den Fig. 7 und 8 zu erkennen, unmittelbar am Grundkörper 2 montiert werden.

Zweckmäßig ist das Stellglied als eine Spindel 12, und die Antriebseinheit als Elektromotor 32, wie in den Fig. 2 bis 5 dargestellt, ausgebildet. Die Spindel 12 wandelt vorzugsweise eine Rotationsbewegung des Elektromotors 32 in eine Linearbewegung des zweiten Befestigungsmittels 10 um.

Ergänzend kann die Spindel 12, wie in den Fig. 2 bis 4 dargestellt, ein Antriebszahnrad 34 aufweisen, in welches ein korrespondierendes Zahnrad an der Antriebseinheit eingreifen kann. Alternativ kann die Spindel 12 über einen Zahnriemen, welcher mit dem Antriebszahnrad 34 zusammenwirkt mit der Antriebseinheit verbunden werden. Die Verbindungen mittels des Antriebszahnrads 34 stellen eine vereinfachte Bewegungs-/Kraftübertragung der Antriebseinheit bereit.

In Fig. 5 ist eine vorteilhafte Variante einer als Elektromotor 32 ausgebildeten Antriebseinheit mit einer Spindel 12 als Stellglied dargestellt. Insbesondere ist der Elektromotor 32 zusammen mit der Spindel 12 in einem Aufnahmeraum 8 des Grundkörpers 2 eingebettet. Zweckmäßig weist der Elektromotor 32 einen Stator 36 und einen Anker 38 auf, die jeweils einen Abschnitt der Spindel 12 umschließen. Eine mit der Spindel 12 verbundene Achse ist dabei mit einem Positionslagegeber 40 verbunden, so dass die Bewegung der Spindel 12 gemessen bzw. insbesondere die lineare Bewegung des zweiten Befestigungsmittels 10 ermittelt werden kann.

Vorzugsweise weist das Stromquellenmodul 1, wie in Fig. 5 dargestellt, einen von außen zugänglichen ersten Steckverbinder 42 auf, welcher elektrisch mit dem Positionslagegeber 40 verbunden ist, so dass eine Empfangseinrichtung, z. B. ein Steuercomputer, über einen Gegensteckverbinder mit dem Positionslagegeber 40 verbunden werden kann.

Vorteilhaft weist das Stromquellenmodul 1, wie in Fig. 5 dargestellt, einen von außen zugänglichen zweiten Steckverbinder 44 auf, welcher elektrisch mit dem Elektromotor 32 verbunden ist. Über den Steckverbinder kann der Elektromotor 32 mit Strom versorgt, und mittels einer entsprechenden Motorsteuerung die Motorleistung angepasst werden.

Der Positionslagegeber 40 und die Stromversorgung für den Elektromotor 32 sind in den Ausführungen der Fig. 2 bis 4 nicht dargestellt. Es liegt im Rahmen der Erfindung, dass die in Fig. 2 bis 4 dargestellten Ausführungen ebenfalls eine entsprechende Stromversorgung und/oder einen entsprechenden Positionslagegeber 40 aufweisen. Insbesondere der Positionslagegeber 40 ist auch nicht auf die Verwendung bei einem Elektromotor 32 beschränkt, sondern kann auch in alternativen, insbesondere den folgenden, Antriebskonzepten umgesetzt werden.

Gemäß einer nicht dargestellten Variante ist die Antriebseinheit ein elektromagnetischer Linearantrieb, welcher das Stellglied und das zweite Befestigungsmittel 10 linear bewegen kann. Diese Antriebseinheit ist besonders geeignet, um unmittelbar am Grundkörper 2, vorzugsweise in einem Aufnahmeraum 8 des Grundkörpers 2, montiert zu werden. Der magnetische Linearantrieb ist dabei vorzugsweise unmittelbar mit dem zweiten Befestigungsmittel 10 verbunden, und beinhaltet als Teil des Antriebs das Stellglied. Insbesondere ersetz der magnetische Linearantrieb die Spindel 12, ein Getriebe 46 und ein Antriebszahnrad 34 die bei einer Ausführung der Antriebseinheit als Elektromotor 49 anfallen können.

Vorzugsweise steht ein Getriebe 46 in Wirkverbindung mit der Antriebseinheit, das eine Bewegung der Antriebseinheit auf das Stellglied übersetzt und insbesondere die Bewegung an das Stellglied anpassen kann. Beispielsweise ist in den Ausführungsbeispielen in den Fig. 2 und 4 ein Getriebe 46 zwischen einem Antriebszahnrad 34 und der Spindel 12 zwischengeschaltet, so dass die auf das Antriebszahnrad 34 von der Antriebseinheit übertragenen Antriebsgrößen in auf die Spindel 12 angepasste Ausgabegrößen umgewandelt werden.

Vorteilhaft ist das Getriebe 46 und/oder die Antriebseinheit in dem ersten und/oder einem weiteren Aufnahmeraum 8, 9 des Grundkörpers 2 angeordnet. Der in Fig. 1 dargestellte Grundkörper 2 weist zwei Aufnahmeräume 8, 9 auf. Schematisch ist in den Fig. 2 und 4 dargestellt, dass in dem ersten Aufnahmeraum 8 die Spindel 12 und ein Getriebe 46 gemeinsam angeordnet sind. Im Ausführungsbeispiel gemäß Fig. 3 ist lediglich die Spindel 12 in dem ersten Aufnahmeraum 8 angeordnet. Entsprechend dem Ausführungsbespiel in Fig. 5 sind die Spindel 12 und der Elektromotor 32 in dem ersten Aufnahmeraum 8 angeordnet.

Die Fig. 1 bis 5 zeigen einen Grundkörper 2, welcher lediglich zwei Aufnahmeräume 8, 9 aufweist. Eine weitere Separierung bzw. eine andere Aufteilung der einzelnen vorgenannten Komponenten liegt, wenn auch nicht dargestellt, im Rahmen der Erfindung. Insbesondere weist der Grundkörper 2 drei Aufnahmeräume auf.

Die Fig. 2 bis 5 zeigen eine zweckmäßige Aufteilung, wobei in dem zweiten Aufnahmeraum 9 zumindest die Transformatoreinheit 14 und in einem ersten Aufnahmeraum 8 zumindest das linearbewegliche Stellglied angeordnet sind.

Entsprechend dem Ausführungsbeispiel des Grundkörpers 2 in Fig. 1 ist der erste Aufnahmeraum 8 zylindrisch ausgebildet. Die zylindrische Form ist besonders vorteilhaft für die Anordnung eines zylindrischen Stellglieds. Der zweite Aufnahmeraum 9 ist vorteilhaft quaderartig ausgebildet, wodurch ein sehr übersichtlicher Bauraum bereitgestellt wird, welcher sich insbesondere zum exakten Positionieren und Anschließen der elektrischen Komponenten eignet, und anschließend vorteilhaft mit einer Vergussmasse ganz oder teilweise vergossen werden kann. Zum einfachen Vergießen der Komponenten in dem jeweiligen Aufnahmeraum 8, 9 weist der Grundkörper 2 vorzugweise mindestens einen Einlasskanal für den Transport der Vergussmasse in seiner Wand 55 auf, der in mindestens einem Aufnahmeraum 8, 9 münden.

Weiterhin ist in Fig. 1 zu erkennen, dass der Grundkörper 2 vorzugsweise zwei Führungsräume 49 zur Anordnung von Stützmittel 50 aufweist. Diese Stützmittel 50 dienen insbesondere dazu, ein Fügewerkzeug zu tragen bzw. stützen und das zweite Befestigungsmittel 10 und das mit dem Befestigungsmittel 10 verbundene Stellglied zu entlasten. Fig. 7 zeigt dabei eine solche Entlastung, wobei das Stellglied wie beschrieben entlastet wird, indem die Stützmittel 50 einen Großteil der Last aufnehmen und auf den Grundkörper 2 übertragen.

Eine besonders vorteilhafte Variante des Stromquellenmoduls 1 ist in Fig. 6 dargestellt. Die in Fig. 6 dargestellte Ausführung zeichnet sich durch eine sehr effektive Kühleinrichtung aus. Fig. 6 soll dabei die Kühleinrichtung verdeutlichen und kann insbesondere mit sämtlichen vorgenannten Ausführungsvarianten kombiniert werden. Das in Fig. 6 dargestellte Stromquellenmodul 1 ist an das Stromquellenmodul 1, welches in Fig. 5 dargestellt ist, angelehnt.

Vorteilhaft weist der Grundkörper 2 entsprechend zu Fig. 6 zumindest ein Kühlkanal 48 auf. Das Beispiel in Fig. 6 weist zumindest zwei Kühlkanäle 48 auf. Der Kühlkanal 48 kann ein fluidisches Kühlmittel führen, wobei der Kühlkanal 48 einen Wärmeabtransport aus zumindest einem Aufnahmeraum, insbesondere von der Transformatoreinheit 14, der Gleichrichteinrichtung 30 oder der Antriebseinheit erzeugten und auf den Grundkörper 2 übertragenen Wärmeenergie, ermöglicht. Vorzugsweise umschließt daher der oder die Kühlkanal/-kanäle 48 die zu kühlenden Komponenten.

Die Kühlkanäle 48 können im Grundkörper 2 durch entsprechende Bohrungen erzeugt werden. Zweckmäßig können auch, wie in Fig. 6 angedeutet, Übergänge 51 zwischen den Kühlkanälen des Grundkörpers 2 zu den jeweiligen Komponenten bereitgestellt werden. Insbesondere die Kühlung von den Sekundärleitern der Transformatoreinheit 14 ist vorteilhaft.

Bevorzugt weisen die Kühlkanäle 48 eine galvanische Beschichtung als Schutz vor Korrosion auf. Die im Grundkörper 2 ausgebildeten Kühlkanäle 48 machen weitestgehend lange Schlauchverbindungen, wie sie aus dem Stand der Technik bekannt sind, unnötig. Insbesondere erfolgt dadurch eine Kühlung der Komponente zumindest über den Grundkörper 2 und bei Bedarf ergänzend mittels eines durch den Kühlkanal 48 im Grundkörper 2 sehr kurzgehaltenen Übergangs 50 an der entsprechenden Komponente selbst. Die vorteilhafte Kühleinrichtung ermöglicht eine optimierte Kühlung, ohne die bekannten offen geführten Schlauchverbindungen sowie Vorteile in der reduzierten Anzahl der erforderlichen Bauteile, des Gewichts und des minimierten Bauraums.

Zwecks eines effektiven Temperaturmanagements kann an besonders anfälligen Stellen ein Temperatursensor 52 in den Grundkörper 2 bzw. unmittelbar an den jeweiligen Komponenten angeordnet werden. Im Ausführungsbeispiel gemäß den Fig. 2 bis 6 ist ein Temperatursensor 52 in der Nähe der Transformatoreinheit 14, insbesondere in Kontakt mit der Transformatoreinheit 14 bzw. der die Transformatoreinheit 14 umgebenen Vergussmasse angeordnet. Besonders bevorzugt ist ein Temperatursensor 52 an der Gleichrichteinrichtung 30 bzw. deren Dioden angeordnet. Der Temperatursensor 52 ist insbesondere an einen Steuerleitungsstecker 22, zweckmäßig gemeinsam mit der Strommessspule 20, angeschlossen, so dass die Ausgabesignale des Temperatursensors 52 vorzugsweise von außerhalb des Stromquellenmoduls 1 zugänglich sind. Mittels des Ausgabesignals wird vorzugsweise die Kühleinrichtung temperaturabhängig gesteuert, die Verwendung des Temperatursensors 52 ist jedoch nicht auf eine Kopplung an die Kühleinrichtung beschränkt, insbesondere kann hierdurch auch lediglich ein Indikator für den Zustand des Stromquellenmoduls 1 bereitgestellt werden.

Gemäß dem Ausführungsbeispiel in Fig.6 weist der Grundkörper 2 Ein- und Auslassanschlüsse 54 auf. Eine Kühlflüssigkeit fließt vom Einlassanschluss 54 durch die Kühlkanäle 48 des Grundkörpers 2 und durch die Transformatoreinheit 14. Von dort wird die Kühlflüssigkeit über einen möglichst kurzen Übergang 51 zurück in einen Kühlkanal 48 und von dort über einen ebenfalls kurzen Übergang 51 durch die Gleichrichteinrichtung 30 geführt. Insbesondere führt ein weiterer Übergang 51 die Kühlflüssigkeit in einen Kühlkanal 48, von dem aus sie, insbesondere durch den Leistungsanschluss 18, zu einem Fügewerkzeug geführt wird. Das oder die Fügewerkzeug(e) bildet/bilden einen externen Kühlkreislauf. Über einen weiteren Anschluss, insbesondere dem Leistungsanschluss 18, wird die Kühlflüssigkeit aus dem externen Stromkreislauf zurück in einen Kühlkanal 48 im Grundkörper 2 geführt. Insbesondere ist in Fig. 6 dargestellt, dass die Kühlkanäle 48 noch mittels Übergängen 51 die Kühlflüssigkeit durch die Antriebseinheit führen und letztendlich ein Kühlkanal 48 an einem Auslassanschluss mündet. Fig. 6 ist dabei lediglich eine beispielhafte Ausführung, eine nicht dargestellte Ausführung ohne Übergänge 51 zu den einzelnen Komponenten oder die Einbindung von anderen Komponenten liegt ebenfalls im Rahmen der Erfindung. Ergänzend kann es sich bei der Kühlflüssigkeit um Kühlmittel oder Wasser mit oder ohne Zusätze handeln.

Zweckmäßig ist der zumindest eine Kühlkanal 48 in zumindest einer Wand 55, vorzugsweise in mehreren Wänden 55, bevorzugt in allen Wänden 55 des Grundkörpers 2 ausgebildet, welche den ersten Aufnahmeraum 8 und/oder weitere Aufnahmeräume 9 umgibt/umgeben. Weiterhin ist der zumindest eine Kühlkanal 48 in zumindest einer Trennwand 56 des Grundkörpers 2 ausgebildet, welche zwei Aufnahmeräume voneinander trennt. Insbesondere die Trennwand 56 ist in Fig. 6 nicht dargestellt, wobei die Trennwand 56 in Fig. 1 dargestellt ist. Besonders bevorzugt ist der zumindest eine Kühlkanal 48 derart in dem Grundkörper 2 ausgebildet, dass zumindest zwei Aufnahmeräume 8, 9 zumindest einseitig von demselben Kühlkanal 48 umgeben, und die Aufnahmeräume 8, 9 mittels des Kühlkanals 48 thermisch miteinander verkoppelt sind.

Die Fig. 7 und 8 zeigen erfindungsgemäße Schweißzangen 58, insbesondere zum Elektro-Punktschweißen. Diese weisen ein Stromquellenmodul 1 nach einer der vorgenannten Ausführungen auf. Diese Schweißzangen 58 weisen ein erstes, als unbeweglicher Elektrodenarm 6 ausgebildetes Fügewerkzeug, und ein zweites, als beweglicher Elektrodenarm 60 ausgebildetes, Fügewerkzeug auf, wobei mit dem ersten Befestigungsmittel 4 der unbewegliche Elektrodenarm 6 verbunden ist, und mit dem zweiten linearbeweglichen Befestigungsmittel 10 der bewegliche Elektrodenarm 60 verbunden ist. Die Elektrodenarme 6, 60 weisen Elektroden 62 auf, welche elektrisch mit der Transformatoreinheit 14 verbunden sind. Insbesondere ist jeweils eine Elektrode 62 an dem Pluspolanschluss und eine Elektrode 62 an dem Minuspolanschluss angeschlossen.

Fig. 7 zeigt eine Ausführung als C-Zange, wobei der grundsätzliche Aufbau aus dem Stand der Technik bekannt ist. Das Stellglied weist das zweite, entlang einer Stellachse X linearbewegliche, Befestigungsmittel 10 auf, wobei an dem Befestigungsmittel der bewegliche Elektrodenarm 60 ausgebildet ist. Insbesondere ist dabei zu erkennen, dass der bewegliche Elektrodenarm 60 mittels Stützmitteln 50 getragen wird, so dass insbesondere keine senkrecht zur Stellachse X wirkende Last auf das zweite Befestigungsmittel 10 bzw. das Stellglied wirkt. Der bewegliche Elektrodenarm 60 kann dadurch parallel zur Stellachse X mittels des Stellglieds in eine Fügestellung und eine Ruhestellung verfahren.

In Fig. 8 ist eine weitere Schweißzange 58 dargestellt, wobei in Fig. 9 das erste und zweite Fügewerkzeug, bzw. die Elektrodenarme 6, 60 in einer Verbindung miteinander gesondert dargestellt sind. Die Schweißzange 58 gemäß der Ausführung in Fig. 8 ist als X-Zange ausgebildet. Der unbewegliche Elektrodenarm 6 weist dabei vorteilhaft ein Drehlager 66 auf. Der bewegliche Elektrodenarm 60 wiederum ist über das Drehlager 66 an dem unbeweglichen Elektrodenarm 6 drehbar gelagert. Insbesondere geht diese Ausführung aus Fig. 9 hervor. Zweckmäßig ist der bewegliche Elektrodenarm 60 mittels einer Schwinge schwenkbar mit dem zweiten Befestigungsmittel 10 des Stellglieds verbunden, so dass mittels der Linearbewegung des zweiten Befestigungsmittels 10 der bewegliche Elektrodenarm 60 um das Drehlager 66 am unbeweglichen Elektrodenarm 6 herum rotiert wird. Das Drehlager 66 hat den besonderen Vorteil, dass es gleichzeitig eine stützende Funktion für den beweglichen Elektrodenarm darstellt. Auf das zweite Befestigungsmittel 10 bzw. das Stellglied wirkt dadurch nur eine geringe Kraft senkrecht bzw. abgewinkelt zu der Stellachse X.

Entsprechend der besonderen Ausführung des Stromquellenmoduls 1, welche insbesondere in Fig. 6 dargestellt ist, weist dieses zumindest einen Kühlkanal 48 auf. Der Kühlkanal 48 ist vorzugsweise, wie beschrieben, insbesondere über die Leistungsanschlüsse 18 mit zumindest einem Kühlkanal 48 des jeweiligen Elektrodenarms 6, 60 fluidisch verbunden. Vorzugsweise sind die Kühlkanäle bzw. der zumindest eine Kühlkanal zum Kühlen der jeweiligen Elektrode 62 des jeweiligen Elektrodenarms 6, 60 bis zu der Elektrode 62 verlaufend ausgebildet.

Der Kühlkanal 48 kann vorzugsweise einen Vorlauf und einen Rücklauf für jeweils einen Elektrodenarm 6, 60 bilden. In einer besonderen Ausführung ist ein Elektrodenarm 6, 60 mit einem als Vorlauf ausgebildeten Kühlkanal 48 verbunden und der andere Elektrodenarm 6, 60 ist mit einem als Rücklauf ausgebildeten Kühlkanal 48 verbunden, wobei die Kühlkanäle 48 der Elektrodenarme extern des Stromquellenmoduls 1 über eine Kühlbrücke miteinander verbunden sind.

Der Kühlkanal 48 kann in dem jeweiligen Elektrodenarm 6, 60 integriert sein, alternativ weist der jeweilige Elektrodenarm 6, 60 Führungsmittel, z. B. eine Nut 64 oder Arme auf, um entlang des Elektrodenarms 6, 60 eine Schlauchleitung zur Leitung der Kühlflüssigkeit zu führen. Die Schlauchleitung kann insbesondere einen Kühlkanal im Elektrodenarm 6, 60 ersetzen oder ergänzen. Beispielsweise kann der Zu- und Rücklauf auf den Kühlkanal im Elektrodenarm 6, 60 und eine Schlauchleitung entlang des Elektrodenarm aufgeteilt werden.

### Bezugszeichenliste

- 1: Stromquellenmodul
- 2: Grundkörper
- 4: Erstes Befestigungsmittel
- 6: Unbeweglicher Elektrodenarm
- 8: Erster Aufnahmeraum
- 9: Zweiter Aufnahmeraum
- 10: Zweites Befestigungsmittel
- 12: Spindel
- 14: Transformatoreinheit
- 16: Umrichter
- 18: Leistungsanschluss
- 20: Strommessspule
- 22: Steuerleitungsstecker
- 24: Primärverschaltung
- 26a: Primärstecker
- 26b: Primärstecker
- 29: Leistungsanschlussverbindungen
- 30: Gleichrichteinrichtung
- 32: Elektromotor
- 34: Antriebszahnrad
- 36: Stator
- 38: Anker
- 40: Positionslagegeber
- 42: Erster Steckverbinder
- 44: Zweiter Steckverbinder
- 46: Getriebe
- 48: Kühlkanal
- 49: Führungsraum
- 50: Stützmittel
- 51: Übergang
- 52: Temperatursensor
- 54: Ein- und Auslassanschluss
- 55: Wand
- 56: Trennwand
- 58: Schweißzange
- 60: Beweglicher Elektrodenarm
- 62: Elektrode
- 64: Nut
- 66: Drehlager

- X: Stellachse

## Patentansprüche

1. Stromquellenmodul (1) für Fügeverfahren mit stromerzeugter Wärmeunterstützung, insbesondere für Schweißzangen (58), aufweisend einen monolithisch einstückig ausgebildeten Grundkörper (2), welcher ein erstes unbewegliches Befestigungsmittel zur Verbindung eines ersten Fügewerkzeugs und zumindest einen ersten Aufnahmeraum (8) ausgebildet hat, wobei in dem ersten Aufnahmeraum (8) ein Stellglied mit einem linearbeweglichen zweiten Befestigungsmittel (10) zur Verbindung mit einem zweiten Fügewerkzeug und in dem ersten oder einem weiteren Aufnahmeraum eine Transformatoreinheit (14) zur elektrischen Versorgung des Fügewerkzeugs angeordnet ist,
**dadurch gekennzeichnet, dass** die Transformatoreinheit (14) stoffschlüssig mit dem Grundkörper (2) in dem Aufnahmeraum vergossen ist.

2. Stromquellenmodul (1) nach Anspruch 1,
**dadurch gekennzeichnet, dass** in dem ersten oder einem weiteren Aufnahmeraum eine Gleichrichteinrichtung (30) angeordnet und mit der Transformatoreinheit (14) elektrisch verbunden ist.

3. Stromquellenmodul (1) nach Anspruch 2,
**dadurch gekennzeichnet, dass** die Gleichrichteinrichtung (30) Dioden aufweist, welche von außerhalb des Grundkörpers (2) zugänglich und austauschbar sind.

4. Stromquellenmodul (1) nach einem der Ansprüche 1 bis 3,
**dadurch gekennzeichnet, dass** eine Antriebseinheit in Wirkverbindung mit dem Stellglied am Grundkörper (2) angeordnet ist, so dass das Stellglied das zweite Befestigungsmittel linear bewegen kann.

5. Stromquellenmodul (1) nach Anspruch 4,
**dadurch gekennzeichnet, dass** das Stellglied als eine Spindel (12) und die Antriebseinheit als Elektromotor (32) ausgebildet ist, wobei die Spindel (12) eine Rotationsbewegung des Elektromotors (32) in eine Linearbewegung des zweiten Befestigungsmittels (10) umwandelt.

6. Stromquellenmodul (1) nach Anspruch 4,
**dadurch gekennzeichnet, dass** die Antriebseinheit ein elektromagnetischer Linearantrieb ist, welcher das Stellglied und das zweite Befestigungsmittel linear bewegen kann.

7. Stromquellenmodul (1) nach Anspruch 6,
**dadurch gekennzeichnet, dass** der elektromagnetische Linearantrieb als Teil des Antriebs das Stellglied umfasst, so dass der elektromagnetische Linearantrieb unmittelbar mit dem zweiten Befestigungsmittel (10) verbunden ist.

8. Stromquellenmodul (1) nach einem der Ansprüche 1 bis 7,
**dadurch gekennzeichnet, dass** ein Getriebe (46) in Wirkverbindung mit der Antriebseinheit steht und eine Bewegung der Antriebseinheit übersetzt und auf das Stellglied überträgt, und insbesondere die Bewegung an das Stellglied anpassen kann, wobei das Getriebe (46) und/oder die Antriebseinheit in dem ersten und/oder einem weiteren Aufnahmeraum des Grundkörpers (2) angeordnet sind.

9. Stromquellenmodul (1) nach einem der Ansprüche 1 bis 8,
**dadurch gekennzeichnet, dass** der Grundkörper (2) zwei, insbesondere drei Aufnahmeräume aufweist, wobei in dem zweiten Aufnahmeraum zumindest die Transformatoreinheit (14) angeordnet ist und in einem ersten Aufnahmeraum (8) zumindest das linearbewegliche Stellglied angeordnet ist.

10. Stromquellenmodul (1) nach Anspruch 9,
**dadurch gekennzeichnet, dass** der Grundkörper (2) zumindest einen Kühlkanal (48) aufweist, welcher ein fluidisches Kühlmittel führen kann, wobei der Kühlkanal (48) einen Wärmeabtransport aus zumindest einem Aufnahmeraum, insbesondere einer von der Transformatoreinheit (14) erzeugten und auf den Grundkörper (2) übertragenen Wärmeenergie, ermöglicht.

11. Stromquellenmodul (1) nach Anspruch 9 oder 10,
**dadurch gekennzeichnet, dass** der zumindest eine Kühlkanal (48) in zumindest einer Wand (55), vorzugsweise in mehreren Wänden (55), bevorzugt in allen Wänden (55) des Grundkörpers (2) ausgebildet ist, welche den ersten Aufnahmeraum (8) und/oder weitere Aufnahmeräume umgibt/umgeben.

12. Stromquellenmodul (1) nach einem der Ansprüche 9 bis 11,
**dadurch gekennzeichnet, dass** der zumindest eine Kühlkanal (48) in zumindest einer Trennwand (56) des Grundkörpers (2) ausgebildet ist, welche zwei Aufnahmeräume voneinander trennt.

13. Stromquellenmodul (1) nach einem der Ansprüche 9 bis 12,
**dadurch gekennzeichnet, dass** der zumindest eine Kühlkanal (48) derart in dem Grundkörper (2) ausgebildet ist, dass zumindest zwei Aufnahmeräume zumindest einseitig von demselben Kühlkanal (48) umgeben, und die Aufnahmeräume mittels des Kühlkanals (48) thermisch miteinander verkoppelt sind.

14. Schweißzange (58) insbesondere zum Elektro-Punktschweißen, aufweisend ein Stromquellenmodul (1) nach einem der Ansprüche 1 bis 13 und ein erstes, als unbeweglicher Elektrodenarm (6) ausgebildetes Fügewerkzeug, und ein zweites, als beweglicher Elektrodenarm ausgebildetes Fügewerkzeug, wobei der unbewegliche Elektrodenarm mit dem ersten Befestigungsmittel, und der bewegliche Elektrodenarm mit dem zweiten linearbeweglichen Befestigungsmittel verbunden ist, wobei die Elektrodenarme elektrisch mit dem Transformator verbundene Elektroden (62) aufweisen.

15. Schweißzange (58) nach Anspruch 14,
**welche** als X-Zange ausgebildet ist, wobei der unbewegliche Elektrodenarm ein Drehlager (66) aufweist, und der bewegliche Elektrodenarm über das Drehlager (66) an dem unbeweglichen Elektrodenarm drehbar gelagert ist und mit einer Schwinge schwenkbar mit dem zweiten Befestigungsmittel (10) des Stellglieds verbunden ist, so dass mittels der Linearbewegung des zweiten Befestigungsmittels (10) der bewegliche Elektrodenarm um das Drehlager (66) am unbeweglichen Elektrodenarm herum rotiert wird.

16. Schweißzange (58) nach Anspruch 14 oder 15,
**dadurch gekennzeichnet, dass** das Stromquellenmodul (1) zumindest einen Kühlkanal (48) aufweist, welcher mit zumindest einem Kühlkanal (48) des beweglichen Elektrodenarms (60) und/oder einem Kühlkanal des unbeweglichen Elektrodenarms (6) fluidisch verbunden ist, wobei die Kühlkanäle bzw. der zumindest eine Kühlkanal zum Kühlen der Elektrode (62) in dem jeweiligen Elektrodenarm bis zu der Elektrode (62) verlaufend ausgebildet ist.

## Claims

1. Current source module (1) for joining methods with current-generated heat support, in particular for welding guns (58), including a base body (2) formed monolithically as a single component, which has a first immovable attachment means for connecting a first joining tool and at least one first formed receiving space (8), wherein in the first receiving space (8) a control element is disposed including a linearly movable second attachment means (10) for connecting to a second joining tool, and in the first or a further receiving space a transformer unit (14) is disposed for electrical supplying of the joining, **characterized in that** the transformer unit (14) is cast in the receiving space in a materially-bonded manner with the base body (2).

2. Current source module (1) according to claim 1,
**characterized in that** a rectifying device (30) is disposed in the first or a further receiving space and is electrically connected to the transformer unit (14).

3. Current source module (1) according to claim 2,
**characterized in that** the rectifying device (30) includes diodes that are accessible and exchangeable from outside the base body (2).

4. Current source module (1) according to one of claims 1 to 3,
**characterized in that** a drive unit is disposed in active connection with the control element on the base body (2), so that the control element can move the second attachment means linearly.

5. Current source module (1) according to claim 4,
**characterized in that** the control element is configured as a spindle (12) and the drive unit as an electric motor (32), wherein the spindle (12) converts a rotational movement of the electric motor (32) into a linear movement of the second attachment means (10).

6. Current source module (1) according to claim 4,
**characterized in that** the drive unit is an electromagnetic linear drive that can move the control element and the second attachment means linearly.

7. Current source module (1) according to claim 6,
**characterized in that** the electromagnetic linear drive comprises the control element as part of the drive, so that the electromagnetic linear drive is directly connected to the second attachment means (10).

8. Current source module (1) according to one of claims 1 to 7,
**characterized in that** a transmission (46) is in active connection with the drive unit and translates a movement of the drive unit and transmits it to the control element, and in particular can adapt the movement to the control element, wherein the transmission (46) and/or the drive unit are disposed in the first and/or a further receiving space of the base body (2).

9. Current source module (1) according to one of claims 1 to 8,
**characterized in that** the base body (2) includes two, in particular three receiving spaces, wherein in the second receiving space at least the transformer unit (14) is disposed, and in a first receiving space (8) at least the linearly movable control element is disposed.

10. Current source module (1) according to claim 9,
**characterized in that** the base body (2) includes at least one cooling channel (48) that can guide a fluidic coolant, wherein the cooling channel (48) enables a heat removal from at least one receiving space, in particular a heat energy generated by the transformer unit (14) and transmitted to the base body (2).

11. Current source module (1) according to claim 9 or 10,
**characterized in that** the at least one cooling channel (48) is formed in at least one wall (55), preferably in a plurality of walls (55), preferably in all walls (55) of the base body (2), which wall/walls surrounds/surround the first receiving space (8) and/or further receiving spaces.

12. Current source module (1) according to one of claims 9 to 11,
**characterized in that** the at least one cooling channel (48) is formed in at least one separating wall (56) of the base body (2), which separating wall (56) separates two receiving spaces from each other.

13. Current source module (1) according to one of claims 9 to 12,
**characterized in that** the at least one cooling channel (48) is formed in the base body (2) such that at least two receiving spaces enclose at least one side of the same cooling channel (48), and the receiving spaces are thermally coupled to each other by the cooling channel (48).

14. Welding gun (58), in particular for electric spot welding, including a current source module (1) according to one of claims 1 to 13, and a first joining tool formed as an immovable electrode arm (6), and a second joining tool formed as a movable electrode arm, wherein the immovable electrode arm is connected to the first attachment means, and the movable electrode arm is connected to the second linearly movable attachment means, wherein the electrode arms include electrodes (62) electrically connected to the transformer.

15. Welding gun (58) according to claim 14,
**which** is configured as an X gun, wherein the immovable electrode arm includes a rotating bearing (66), and the movable electrode arm is rotatably supported on the immovable electrode arm via the rotating bearing (66), and is pivotably connected by a swing arm to the second attachment means (10) of the control element, so that using the linear movement of the second attachment means (10) the movable electrode arm is rotated about the rotating bearing (66) on the immovable electrode arm.

16. Welding gun (58) according to claim 14 or 15,
**characterized in that** the current source module (1) includes at least one cooling channel (48) that is fluidically connected to at least one cooling channel (48) of the movable electrode arm (60) and/or a cooling channel of the immovable electrode arm (6), wherein the cooling channels or the at least one cooling channel for cooling the electrode (62) is formed extending in the respective electrode arm up to the electrode (62).

## Revendications

1. Module formant source de courant (1) destiné à un procédé d'assemblage avec support thermique généré par un courant, en particulier pour pinces porte-électrodes (58), ledit module comportant un corps de base (2) conçu d'une seule pièce de manière monolithique et qui comporte un premier moyen de fixation fixe, destiné à relier un premier outil d'assemblage, et au moins un premier espace de réception (8), un actionneur muni d'un deuxième moyen de fixation (10) mobile linéairement, destiné à être relié à un deuxième outil d'assemblage, étant disposé dans le premier espace de réception (8) et une unité formant transformateur (14) destinée à alimenter électriquement l'outil d'assemblage étant disposée dans le premier espace de réception ou un autre espace de réception,
**caractérisé en ce que** l'unité formant transformateur (14) est coulée dans l'espace de réception en liaison de matière avec le corps de base (2).

2. Module formant source de courant (1) selon la revendication 1,
**caractérisé en ce qu'**un dispositif de redressement (30) est disposé dans le premier espace de réception ou dans un autre espace de réception et est relié électriquement à l'unité formant transformateur (14).

3. Module formant source de courant (1) selon la revendication 2,
**caractérisé en ce que** le dispositif de redressement (30) comporte des diodes qui sont accessibles et remplaçables depuis l'extérieur du corps de base (2).

4. Module formant source de courant (1) selon l'une des revendications 1 à 3,
**caractérisé en ce qu'**une unité d'entraînement est disposée au niveau du corps de base (2) en liaison fonctionnelle avec l'actionneur, de sorte que l'actionneur puisse déplacer linéairement le deuxième moyen de fixation.

5. Module formant source de courant (1) selon la revendication 4,
**caractérisé en ce que** l'actionneur est conçu sous la forme d'une broche (12) et l'unité d'entraînement est conçue sous la forme d'un moteur électrique (32), la broche (12) convertissant un mouvement de rotation du moteur électrique (32) en un mouvement linéaire du deuxième moyen de fixation (10).

6. Module source de courant (1) selon la revendication 4,
**caractérisé en ce que** l'unité d'entraînement est un entraînement linéaire électromagnétique qui peut déplacer linéairement l'actionneur et le deuxième moyen de fixation.

7. Module formant source de courant (1) selon la revendication 6,
**caractérisé en ce que** l'entraînement linéaire électromagnétique inclut l'actionneur comme partie de l'entraînement, de sorte que l'entraînement linéaire électromagnétique soit directement relié au deuxième moyen de fixation (10).

8. Module formant source d'énergie (1) selon l'une des revendications 1 à 7,
**caractérisé en ce qu'**une transmission (46) est reliée fonctionnellement à l'unité d'entraînement et transforme un mouvement de l'unité d'entraînement et le transmet à l'actionneur, et peut notamment adapter le mouvement à l'actionneur, la transmission (46) et/ou l'unité d'entraînement étant disposées dans le premier espace de réception et/ou un autre espace de réception du corps de base (2).

9. Module formant source d'alimentation (1) selon l'une des revendications 1 à 8,
**caractérisé en ce que** le corps de base (2) comporte deux, notamment trois, espaces de réception, au moins l'unité formant transformateur (14) étant disposée dans le deuxième espace de réception et au moins l'actionneur mobile linéairement étant disposé dans un premier espace de réception (8).

10. Module formant source de courant (1) selon la revendication 9,
**caractérisé en ce que** le corps de base (2) comporte au moins un conduit de refroidissement (48) qui peut transporter un agent de refroidissement fluidique, le conduit de refroidissement (48) permettant un transport de chaleur depuis au moins un espace de réception, en particulier une énergie thermique générée par l'unité formant transformateur (14) et transmise au corps de base (2).

11. Module formant source de courant (1) selon la revendication 9 ou 10,
**caractérisé en ce que** l'au moins un conduit de refroidissement (48) est formé dans au moins une paroi (55), de préférence dans plusieurs parois (55), de préférence dans toutes les parois (55), du corps de base (2), laquelle/lesquelles entoure(nt) le premier espace de réception (8) et/ou d'autres espaces de réception.

12. Module formant source de courant (1) selon l'une des revendications 9 à 11,
**caractérisé en ce que** l'au moins un conduit de refroidissement (48) est formé dans au moins une paroi de séparation (56) du corps de base (2) qui sépare deux espaces de réception l'un de l'autre.

13. Module formant source de courant (1) selon l'une des revendications 9 à 12,
**caractérisé en ce que** l'au moins un conduit de refroidissement (48) est formé dans le corps de base (2) de telle sorte qu'au moins deux espaces de réception sont entourés sur au moins un côté par le même conduit de refroidissement (48), et les espaces de réception sont couplés thermiquement les uns aux autres au moyen du conduit de refroidissement (48).

14. Pince porte-électrodes (58), destinée notamment au soudage par points électrique, comprenant un module formant source de courant (1) selon l'une des revendications 1 à 13 et un premier outil d'assemblage conçu sous la forme d'un bras d'électrode fixe (6) et un deuxième outil d'assemblage conçu comme un bras d'électrode mobile, le bras d'électrode fixe étant relié au premier moyen de fixation, et le bras d'électrode mobile étant relié au deuxième moyen de fixation mobile linéairement, les bras d'électrodes comportant des électrodes (62) reliées électriquement au transformateur.

15. Pince porte-électrodes (58) selon la revendication 14, qui est conçue comme une pince en X, le bras d'électrode fixe comportant un palier pivotant (66), et le bras d'électrode mobile étant monté de manière rotative sur le bras d'électrode fixe par le biais du palier pivotant (66) et étant relié au deuxième moyen de fixation (10) de l'actionneur de manière pivotante à l'aide d'une bascule, de sorte que le mouvement linéaire du deuxième moyen de fixation (10) entraîne la rotation du bras d'électrode mobile autour du palier pivotant (66) sur le bras d'électrode immobile.

16. Pince porte-électrodes (58) selon la revendication 14 ou 15,
**caractérisée en ce que** le module formant source de courant (1) comporte au moins un conduit de refroidissement (48) qui est relié fluidiquement à au moins un conduit de refroidissement (48) du bras d'électrode mobile (60) et/ou un conduit de refroidissement du bras d'électrode fixe (6), les conduits de refroidissement ou l'au moins un conduit de refroidissement étant conçu(s) pour s'étendre jusqu'à l'électrode (62) dans le bras d'électrode respectif afin de refroidir l'électrode (62).
